# EUROPÄISCHE PATENTSCHRIFT

(11) **EP 3 010 725 B1**
(45) Veröffentlichungstag und Bekanntmachung des Hinweises auf die Patenterteilung: **04.10.2017**
(21) Anmeldenummer: 14734033.5
(22) Anmeldetag: 17.06.2014
(51) Int. Cl.: B44B 5/00, B44B 5/02, B23P 19/04

(54) **VORRICHTUNG UND VERFAHREN ZUM EINSETZEN EINES RONDENKERNS IN EINEN RONDENRING**
APPARATUS AND METHOD FOR INSERTING A CIRCULAR-BLANK CORE INTO A CIRCULAR-BLANK RING
DISPOSITIF ET PROCÉDÉ D'INSERTION D'UN NOYAU DE DÉCOUPE DANS UN ANNEAU DE DÉCOUPE

(30) Priorität: 19.06.2013 DE 102013106375
(43) Veröffentlichungstag der Anmeldung: 27.04.2016
(73) Patentinhaber: Schuler Pressen GmbH, 73033 Göppingen (DE)
(72) Erfinder: KNEER, Simon, 73054 Eislingen (DE); HOYLER, Wolfgang, 73072 Donzdorf (DE); HARTL, Gerhard, 73035 Göppingen (DE)
(74) Vertreter: Rüger, Barthelt & Abel
(86) Internationale Anmeldenummer: PCT/EP2014/062638
(87) Internationale Veröffentlichungsnummer: WO 2014/202562

(56) Entgegenhaltungen:
- EP-A1- 0 648 618
- DE-A1- 3 339 387
- DE-A1- 10 044 669
- DE-A1- 10 057 000
- DE-A1- 19 841 622

## Beschreibung

Die vorliegende Erfindung betrifft eine Vorrichtung und ein Verfahren zum Einsetzen eines Rondenkerns mit einer unrunden Außenkontur in einen Rondenring, dessen Loch eine unrunde Innenkontur aufweist. Solche zumindest zweiteiligen oder auch dreiteiligen Ronden werden beispielsweise für das Prägen von Münzen, Medaillen oder ähnlichem aus mehreren metallischen Materialien verwendet. Bei drei- oder mehrteiligen Ronden wird in den äußersten Rondenring ein ringförmiger Rondenkern eingesetzt, der wiederum einen Rondenring im Bezug auf den darin einzusetzenden Rondenkern darstellt. Bei den Bezeichnungen "Rondenkern" und "Rondenring" sind jeweils die beiden aneinander angrenzenden und ineinander eingesetzten Rondenteile gemeint.

Das Einsetzen eines Rondenkerns in den Rondenring ist dann einfach, wenn das Loch im Rondenring und die Außenkontur des Rondenkerns jeweils kreisrund sind. Weichen jedoch diese Konturen von der kreisrunden Form ab, muss beim Einsetzen des Rondenkerns in den Rondenring zum einen eine im Wesentlichen übereinstimmende Ausrichtung des Lochmittelpunktes und den Rondenkernmittelpunktes erfolgen und zum anderen eine exakte Ausrichtung des Rondenkerns gegenüber dem Rondenring in Umfangsrichtung erfolgen, so dass das Einsetzen überhaupt möglich ist. Sowohl eine Verdrehung eines der beiden Rondenteile in Umfangsrichtung als auch eine Relativverschiebung der beiden Rondenteile kann zu Störungen im Prägevorgang und zur Blockierung der Zufuhr von Ronden zur Prägepresse führen.

DE 33 39 387 A1 offenbart eine Vorrichtung zum Zuführen von unrunden Platinen in das Werkzeug einer Prägepresse. Beim Transport der Platinen mit einer Transporteinrichtung gleiten diese an Führungsbahnen und orientieren sich dadurch in Umfangsrichtung. Das Einsetzen von unrunden Kernen in ein unrundes Loch eines Rings ist nicht beschrieben.

Das Zuführen von kreisrunden Kernen in kreisrunde Löcher von Platinen ist beispielsweise in DE 100 57 000 A1, DE 198 41 622 A1 oder DE 100 44 669 A1 beschrieben. Allerdings sind auch hier keine Hinweise enthalten, wie unrunde Kerne in unrunde Löcher eingesetzt werden könnten.

Es kann daher als Aufgabe der vorliegenden Erfindung angesehen werden, eine Vorrichtung und ein Verfahren zum Einsetzen eines Rondenkerns mit einer unrunden Außenkontur in ein Loch eines Rondenrings mit unrunder Innenkontur zu schaffen.

Diese Aufgabe wird durch eine Vorrichtung mit den Merkmalen des Patentanspruches 1 sowie ein Verfahren mit den Merkmalen des Patentanspruches 11 gelöst.

Erfindungsgemäß ist eine Transporteinrichtung zum Transportieren des Rondenrings zu einer Einsetzstelle vorgesehen. An der Einsetzstelle wird der Rondenkern in den Rondenring eingesetzt. Im Bereich der Einsetzstelle ist eine Zuführeinrichtung angeordnet. Die Zuführeinrichtung dient dazu, den Rondenkern am Loch des Rondenrings zu positionieren. Dabei kann der Rondenkern unmittelbar an dem Rondenring anliegen oder mit geringem Abstand benachbart zum Loch positioniert werden.

Mit Hilfe einer Eindrückeinrichtung, die ein bewegbares Eindrückteil aufweist, wird der Rondenkern mit einer Eindrückkraft beaufschlagt. Dabei wird der Rondenkern in Richtung der Eindrückkraft zum Rondenring hin beaufschlagt. Sind der Rondenkern und der Rondenring in Umfangsrichtung und in ihrer Position relativ zueinander korrekt ausgerichtet, so dass die unrunde Außenkontur des Rondenkerns mit der unrunden Innenkontur des Loches übereinstimmt, wird der Rondenkern durch die Eindrückkraft in den Rondenring gedrückt und kann anschließend durch die Transporteinrichtung von der Einsetzstelle weg, beispielsweise zur Prägepresse hin, transportiert werden.

Erfindungsgemäß weist die Eindrückeinrichtung an der Einsetzstelle ein Ausrichtmittel zur Relativverdrehung des Rondenrings gegenüber dem Rondenkern in Umfangsrichtung des Rondenrings auf. Mithilfe dieses Ausrichtmittels kann der Rondenring in eine vorgegebene Drehlage gebracht werden, so dass der Rondenkern in das Loch einsetzbar ist. Vorzugsweise wird das Ausrichtmittel zur Relativverdrehung durch die Eindrückkraft der Eindrückeinrichtung aktiviert. Das Ausrichtmittel kann zur Drehung des Rondenrings in dessen Umfangsrichtung insbesondere an der Innenkontur des Rondenrings angreifen. Dazu kann das Ausrichtmittel beispielsweise einen einteiligen oder mehrteiligen Ausrichtdorn aufweisen.

Bei einem bevorzugten Ausführungsbeispiel kann das Ausrichtmittel einen Stützring mit einer Stützfläche für den Rondenring sowie einen Ausrichtdorn mit einer unrunden Außenkontur aufweisen. Der Stützring ist in Richtung der Eindrückkraft bewegbar. Solange der Rondenkern an dem Rondenring anliegt, wird der Rondenring durch die Eindrückkraft gemeinsam mit dem Stützring bewegt und der Rondenring wird über den Ausrichtdorn geschoben. Dabei gelangt die Innenkontur des Loches den Rondenrings in Kontakt mit mehreren Kontaktstellen am Ausrichtdorn. Dadurch richtet sich der Rondenring in seiner Umfangsrichtung am Ausrichtdorn aus. Die Drehlage wird durch die Position der Kontaktstellen an der unrunden Außenkontur des Ausrichtdornes vorgegeben. Der Rondenring nimmt somit eine Solldrehlage ein. Sobald diese erreicht ist, wird durch die Eindrückkraft das Einsetzen des Rondenkerns in den Rondenring bewirkt. Auch eine Relativposition der beiden Rondenteile in einer Querrichtung und einer Längsrichtung wird dadurch erreicht. In der Querrichtung und der Längsrichtung können die beiden Rondenteile beim Transport gegeneinander verschoben werden. Über den Ausrichtdorn wird die Position des Rondenrings in einer durch die Quer- und Längsrichtung aufgespannten Ebene vorgegeben.

Vorzugsweise ist der Stützring in seine unbeaufschlagte Ausgangslage durch ein Vorspannmittel vorgespannt. Das Vorspannmittel bewirkt, dass der Rondenring vom Ausrichtdorn herunter geschoben wird, nachdem der Rondenkern in das Loch des Rondenrings eingesetzt ist und/oder nachdem die Eindrückkraft reduziert wird.

Bei dieser vorteilhaften Ausführung kann durch einfache mechanische Mittel durch das Erzeugen der Eindrückkraft eine Relativverdrehung des Rondenrings und/oder Verschiebebewegung in Längs- und/oder Querrichtung bewirkt werden, wenn sich der Rondenring nicht in der vorgegebenen Drehlage bzw. Relativlage in Längs- und/oder Querrichtung gegenüber dem Rondenkern befindet.

Bei einem Ausführungsbeispiel weist die Transporteinrichtung eine Transportfläche für den gleitenden Transport des Rondenrings zur Einsetzstelle auf. Ein solcher Transport kann einfach und schnell realisiert werden, so dass für das nach dem Einsetzen des Rondenkerns in den Rondenring durchzuführende Prägen hohe Hubzahlen erreicht werden können. Zum Transport kann die Transporteinrichtung ein relativ zu der Transportfläche bewegbares Transportteil aufweisen. Dieses Transportteil hat vorzugsweise eine Rondenaussparung zur Aufnahme des Rondenrings. Die Rondenaussparung ist zumindest zur Transportfläche und an der entgegengesetzten Seite offen. Dadurch können die Rondenringe sehr leicht von der der Transportfläche entgegengesetzte Seite in die Rondenaussparungen eingesetzt und gleitend über die Transportfläche bewegt werden. Beispielsweise kann die Transporteinrichtung eine Mehrzahl von Transportteilen aufweisen, die drehbar um eine Drehachse gelagert sind.

Die Stützfläche des Stützrings ist in dessen Ausgangslage vorzugsweise in einer gemeinsamen Ebene mit der Transportfläche an der Einsetzstelle angeordnet. Die Rondenringe können dann im Wesentlichen stufenlos über die Transportfläche auf die Stützfläche des Stützrings bewegt werden.

Das freie Ende des Ausrichtdorns befindet sich vorzugsweise in oder geringfügig unterhalb der Ebene, in der die Stützfläche des Stützrings in dessen Ausgangslage angeordnet ist. Dadurch wird eine Behinderung der Bewegung des Rondenrings durch den Ausrichtdorn vermieden.

Die Kontur der Mantelfläche des Ausrichtdorns kann bei einer Ausführungsform an die Außenkontur des Rondenkerns bzw. an die Innenkontur des Rondenrings angepasst sein. Es ist alternativ auch möglich, die Mantel- bzw. Außenfläche des Ausrichtdorns verschieden von den Konturen des Loches bzw. des Rondenkerns zu wählen. Für die eindeutige Ausrichtung des Rondenrings in Umfangsrichtung um seine Achse ist es ausreichend, wenn die Mantel- bzw. Außenfläche des Ausrichtdorns drei in Umfangsrichtung beabstandete Kontaktstellen bzw. Kontaktelemente aufweist, die der Innenkontur des Loches des Rondenrings zugeordnet sind und zur Relativverdrehung des Rondenrings mit diesem in Kontakt gelangen. Beispielsweise kann der Ausrichtdorn eine im Querschnitt polygonähnliche Kontur mit drei oder mehr Eckbereichen aufweisen. Vorzugsweise weisen diese Eckbereiche abgerundete und/oder facettierte und/oder angefaste Ecken bzw. Kanten auf. Der Ausrichtdorn kann an seinem freien Ende auch einer Fase oder eine andere verjüngende Form als Einführschräge aufweisen.

Bei einem vorteilhaften Ausführungsbeispiel weist die Zuführeinrichtung ein translatorisch bewegbares Zuführteil auf. Das Zuführteil kann eine Kernaussparung zur Aufnahme des Rondenkerns aufweisen. Diese Kernaussparung ist vorzugsweise an zwei entgegengesetzten Seiten hin offen. Der Rondenkern kann auf diese Weise einfach von einer Seite her in die Kernaussparung eingelegt und nach dem Transport zur Einsetzstelle von der einen Seite her mit der Eindrückkraft beaufschlagt und auf der jeweils anderen Seite gegen und/oder in den Rondenring gedrückt werden.

Das Zuführteil ist vorzugsweise in einer Zuführrichtung bewegbar und kann beispielsweise translatorisch bewegbar gelagert sein. Die Zuführrichtung schneidet die durch die Transporteinrichtung vorgegebene Transportrichtung der Rondenringe an der Einsetzstelle.

Bei einer weiteren bevorzugten Ausführungsform weist die Zuführeinrichtung ein Zuführmittel, beispielsweise einen Zuführkanal, auf, der den Rondenkern zu dem Eindrückteil transportiert, dessen Bewegung den Rondenkern zum Rondenring weiter transportiert und anschließend gegen den Rondenring mit der Eindrückkraft beaufschlagt. Dadurch kann der Rondenkern beispielsweise zu einer Stelle unterhalb des an der Einsetzstelle positionierten Rondenrings transportiert, mittels dem Eindrückteil bis zu dem Rondenring angehoben und dann mit der Eindrückkraft gegen den Rondenring gedrückt werden.

Vorteilhafte Ausgestaltungen der Vorrichtung sowie des Verfahrens ergeben sich aus den abhängigen Patentansprüchen sowie der Beschreibung. Die Beschreibung beschränkt sich auf wesentliche Merkmale der Erfindung. Die Zeichnung ist ergänzend heranzuziehen. Nachfolgend werden Ausführungsbeispiele der Erfindung anhand der beigefügten Zeichnung näher erläutert. Es zeigen:
Figur 1 eine schematische blockschaltbildähnliche Darstellung eines Ausführungsbeispiels der Vorrichtung gemäß der vorliegenden Erfindung,
Figur 2 eine Draufsicht auf ein Ausführungsbeispiel eines Transportteiles einer Transporteinrichtung der Vorrichtung aus Figur 1,
Figur 3 eine Draufsicht auf ein Ausführungsbeispiels eines Zuführteils einer Zuführeinrichtung der Vorrichtung nach Figur 1,
Figur 4 eine perspektivische Darstellung der Lage des Transportteiles gemäß Figur 2 und des Zuführteiles gemäß Figur 3 an einer Einsetzstelle der Vorrichtung,
Figur 5 eine perspektivische, teilgeschnittene Darstellung einer Eindrückeinrichtung an der Einsetzstelle der Vorrichtung,
Figur 6 eine perspektivische, teilgeschnittene Darstellung der Vorrichtung nach Figur 1 an der Einsetzstelle,
Figur 7 eine perspektivische, teilgeschnittene Darstellung des Ausschnitts A aus Figur 6,
Figuren 8a bis 8e verschiedene Ausführungsformen eines Ausrichtdorns der Eindrückeinrichtung in Draufsicht,
Figur 9 ein schematisches Schnittebild durch ein weiteres Ausführungsbeispiel einer Vorrichtung im Bereich der Einsetzstelle,
Figur 10 das Anschlagteil aus Figur 9 in perspektivischer Darstellung und
Figur 11 das Zuführkanalteil aus Figur 9 in perspektivischer Darstellung.

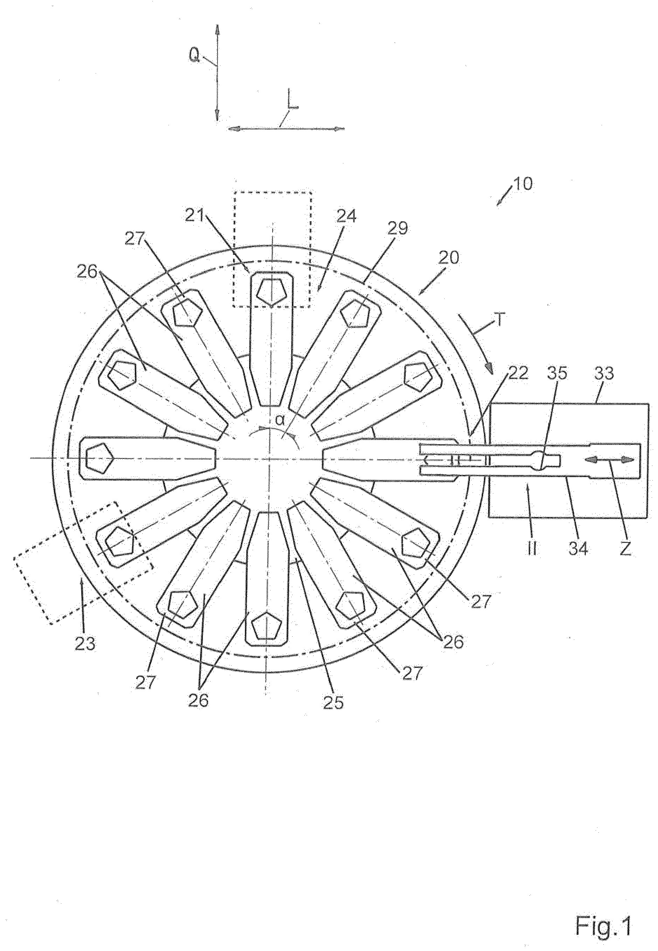

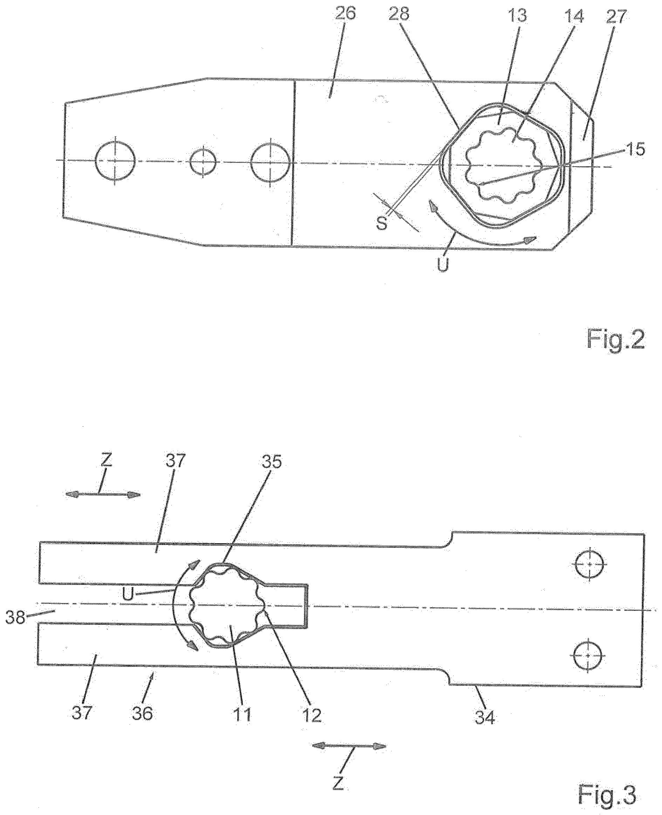

Figur 1 zeigt eine schematische Darstellung einer Vorrichtung 10. Die Vorrichtung 10 dient zum Einsetzen eines Rondenkerns 11 mit einer unrunden Außenkontur 12 in einen Rondenring 13 mit einem zentralen Loch 14, wobei das Loch 14 eine unrunde Innenkontur 15 aufweist. Die Innenkontur 15 ist an die Außenkontur 12 angepasst, so dass der Rondenkern 11 in das Loch 14 des Rondenrings 13 eingesetzt bzw. eingedrückt werden kann. Der Rondenkern 11 und der Rondenring 13 sind in den Figuren 2 und 3 beispielhaft veranschaulicht. Die Konturen 12, 15 sind beispielhaft als sogenannte "Kordelrandform" mit einer wellenförmig im Kreis verlaufenden Kante veranschaulicht. Es versteht sich, dass auch andere unrunde Konturen 12, 15 verwendet werden können, beispielsweise polygonale Konturen. Wie in Figur 2 zu erkennen ist, weist beim Ausführungsbeispiel der Rondenring 13 auch eine unrunde Außenkontur auf, die beispielsweise von einem Polygon gebildet sein kann. Die Außenkontur des Rondenrings 13 könnte in Abwandlung zu den bevorzugten Ausführungsformen auch kreisrund sein.

Für die Beschreibung der Erfindung wird beispielhaft eine Ronde mit zwei Rondenteilen 11, 13 beschrieben. Der Rondenkern 13 kann aber bei drei- oder mehrteiligen Ronden auch ringförmig mit einem Loch ausgeführt sein und dadurch einen inneren Rondenring gegenüber einem dort einzusetzenden weiteren Rondenteil darstellen. Die Begriffe "Rondenring" und "Rondenkern" sollen also auf die jeweils unmittelbar aneinander anliegenden und ineinander eingesetzten Rondenteile verstanden werden.

Zu der Vorrichtung 10 gehört eine Transporteinrichtung 20. Die Transporteinrichtung 20 dient dazu, Rondenringe von einer Aufnahmestelle 21, an der die Rondenringe 13 der Transporteinrichtung 20 übergeben werden, zu einer Einsetzstelle 22 zu transportieren. An der Einsetzstelle 22 wird in die Rondenringe 13 jeweils ein Rondenkern 11 eingesetzt. Beim Ausführungsbeispiel der Vorrichtung 10 dient die Transporteinrichtung 20 außerdem dazu, den Rondenring 13 mit dem darin eingesetzten Rondenkern 11 von der Einsetzstelle 22 weiter zu einer Abgabestelle 23 zu transportieren. An der Abgabestelle 23 wird die Ronde bestehend aus dem Rondenring 13 und dem eingesetzten Rondenkern 11 direkt an eine Prägepresse oder an eine weitere Transporteinheit abgegeben. Alternativ dazu ist es auch möglich, die Münzen an einer Prägestation nach dem Einsetzen des Rondenkerns 11 in den Rondenring 13 zu prägen und anschließend an der Abgabestelle 23 die fertig geprägte Münze abzugeben.

Bei dem hier beschriebene Ausführungsbeispiel erfolgt der Transport der Rondenringe 13 mit oder eingesetzten Rondenkern 11 gleitend an oder auf einer Transportfläche 24. Die Transportfläche 24 ist beim Ausführungsbeispiel im Wesentlichen stufenlos eben ausgebildet, so dass die Rondenringe 13 gleitend ohne hängen zu bleiben über die Transportfläche 24 bewegt werden können. Unter "im Wesentlichen stufenlos eben" ist zu verstehen, dass in der Transportfläche Bohrungen oder Löcher vorhanden sein können, deren Durchmesser im Verhältnis zum Durchmesser der Ronde 11, 13 klein ist, so dass die Ronde ohne zu Verkeilen oder Verklemmen gleitend entlang der Transportfläche 24 bewegt werden kann.

Beim Ausführungsbeispiel führt die Transporteinrichtung 20 den Transport der Rondenringe 13 mit oder ohne eingesetzten Rondenkern 11 auf einer Kreisbahn bzw. einem Kreisbahnabschnitt aus. Die Transportrichtung T verläuft entsprechend in Richtung der Kreisbahn. Hierfür weist die Transporteinrichtung einen Drehteller 25 auf, der über einen Antrieb schrittsweise um jeweils einen vorgegebenen Drehwinkel α weitergedreht wird. An dem Drehteller 25 sind mehrere Transportteile 26 befestigt. Der Betrag des Drehwinkels α, um den der Drehteller 25 schrittsweise gedreht wird, ist durch die Anzahl der Transportteile 26 bestimmt.

Jedes Transportteil 26 erstreckt sich beim Ausführungsbeispiel radial vom Drehteller 25 weg, so dass das freie Ende 27 jedes Transportteiles 26 mit geringem Abstand neben oder über der Transportfläche 24 angeordnet ist. Der Abstand ist dabei kleiner als die Dicke des Rondenrings 13. Am freien Ende 27 ist in dem Transportteil 26 eine Rondenaussparung 28 vorhanden, die zur Aufnahme genau eines Rondenrings 13 dient. Die Rondenaussparung 28 ist zur Transportfläche 24 hin und auf der dazu entgegengesetzten Seite offen und durchsetzt das Transportteil 26 daher vollständig. Die Rondenaussparung 28 ist bei dem hier dargestellten Ausführungsbeispiel in Umfangsrichtung ringförmig geschlossen. Insbesondere kann, wie in den Figuren 1 und 2 veranschaulicht, die Kontur und Form der Rondenaussparung 28 an die Kontur oder Form des Rondenrings 13 angepasst sein. Dadurch wird die Drehlage des Rondenrings 13 in Bezug auf seine Umfangsrichtung U im Wesentlichen vorgegeben. Durch die beispielsgemäß unrunde Außenkontur des Rondenrings 13 und die entsprechend angepasste unrunde Kontur der Rondenaussparung 28 ist ein Verdrehen des Rondenrings innerhalb der Rondenaussparung 28 nur eingeschränkt möglich. Da jedoch das Zuführen und Einsetzen des Rondenrings 13 in die Rondenaussparung 28 an der Aufnahmestelle 21 ohne Verklemmen problemlos gewährleistet sein muss, verbleibt zwischen der Außenkontur des Rondenrings 13 und der Kontur der Rondenaussparung 28 ein Spiel S, das in Figur 2 beispielhaft an einer Stelle dargestellt ist. Aufgrund dieses Spiels S und des gleitenden Transports des Rondenrings 13 entlang der Transportfläche 24 zur Einsetzstelle 22 kann es zu Verdrehungen des Rondenrings innerhalb der Rondenaussparung 28 in Umfangsrichtung U und/oder Verschiebungen in einer Längsrichtung L und/oder einer Querrichtung Q kommen. Die Längsrichtung L und die Querrichtung Q spannen eine Ebene parallel zu der Transportfläche 24 entlang der die Rondenringe 13 transportiert werden auf. Diese Verdrehungen und/oder Verschiebungen können beim Einsetzen des unrunden Rondenkerns 11 in das Loch 14 zu Schwierigkeiten führen, die durch die vorliegende Erfindung ausgeräumt werden, wie dies nachfolgend im Einzelnen beschrieben ist.

Alternativ zu der dargestellten Ausführungsform kann die Rondenaussparung 28 nach radial außen auch offen sein. Die Rondenringe 13 können bei dieser Ausführung auch an einem sich entlang der Transportfläche 24 in Transportrichtung T erstreckenden Führungssteg oder Führungskörper 29 geführt werden, was in Figur 1 lediglich sehr schematisch durch die strichpunktierte Linie veranschaulicht ist.

Der Transport der Rondenringe 13 durch die Transporteinrichtung 20 kann in einer horizontalen, in einer vertikalen oder auch in einer beliebig geneigten Ebene erfolgen.

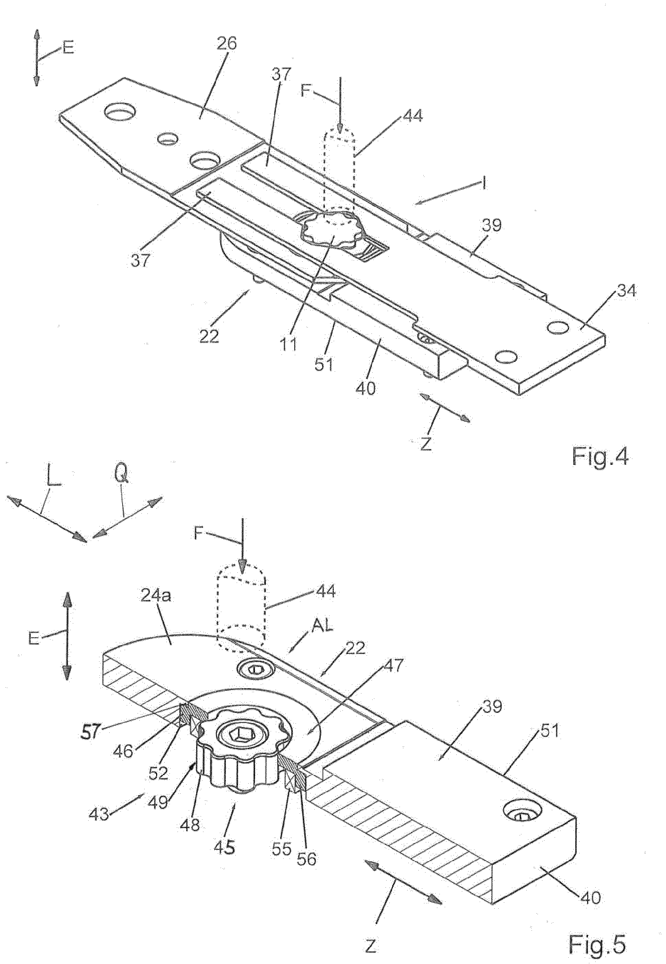

Neben der Einsetzstelle 22 und benachbart zur Transportfläche 24 ist eine Zuführeinrichtung 33 angeordnet. Die Zuführeinrichtung 33 dient dazu, den Rondenkern 11 an der Einsetzstelle 22 am Loch 14 des Rondenrings 13 zu positionieren, so dass der Rondenkern 11 in das Loch 14 eingesetzt werden kann. Die Zuführeinrichtung 33 weist dazu ein bewegbares Zuführteil 34 auf. Das Zuführteil 34 ist beispielsgemäß translatorisch zwischen einer ausgefahrenen Stellung I (Figur 4) und einer zurückgezogenen Stellung II (Figur 1) hin und her bewegbar. Das Zuführteil 34 weist einem Halteabschnitt 36 eine Kernaussparung 35 auf, in der der Rondenkern 11 in der zurückgezogenen Stellung II angeordnet wird. Die Kernaussparung 35 durchsetzt das Zuführteil 34 vollständig, so dass die Kernaussparung 35 an zwei entgegengesetzten Seiten offen ist.

Sowohl das Zuführteil 34, als auch das Transportteil 26 sind beispielsgemäß durch plattenartig dünne Flachteile gebildet. Die Rondenaussparung 28 bzw. die Kernaussparung 35 sind zu den jeweils beiden Flachseiten der Teile 26, 34 hin offen.

Das Zuführteil 34 ist in einer Zuführrichtung Z und in einer Ebene bewegbar angeordnet, die parallel und mit Abstand zur Transportfläche 24 ausgerichtet ist. In der ausgefahrenen Stellung I des Zuführteils 34 befindet sich ein Transportteil 26 der Transporteinrichtung 20 zwischen dem Halteabschnitt 36 mit der Kernaussparung 35 des Zuführteils 34 und der Transportfläche 24.

Bei dem hier dargestellten Ausführungsbeispiel hat der Halteabschnitt 36 des Zuführteils 34 eine gabelförmige Gestalt mit zwei sich parallel zueinander in der Zuführrichtung Z erstreckenden Zinken 37. Zwischen den Zinken 37 ist ein Spalt 38 gebildet, der die Kernaussparung 35 durchsetzt bzw. in die Kernaussparung 35 mündet. Die Kernaussparung 35 ist hierbei als eine Erweiterung des Spalts 38 ausgeführt, wobei in jedem Zinken 37 eine den Spalt 38 erweiternde Vertiefung oder Einkerbung und mithin jeweils ein Abschnitt der Kernaussparung 35 vorhanden ist.

Die Kontur der Kernaussparung 35 muss nicht der Außenkontur 12 des Rondenkerns 11 entsprechen. Beim bevorzugten Ausführungsbeispiel ist die Kontur der Kernaussparung 35 so gewählt, dass der Rondenkern 11 an mehreren in Umfangsrichtung beabstandeten Stellen am Zuführteil 34 anliegt. Vorzugsweise ist die Kontur der Kernaussparung 35 unrund, so dass eine Verdrehung des Rondenkerns 11 in Umfangsrichtung U vermieden bzw. beschränkt ist. Die Kernaussparung 35 kann die Kontur eines unregelmäßigen Polygons aufweisen.

Durch die gabelförmige Gestalt des Zuführteils 34 können die beiden Zinken 37 elastisch gegeneinander bewegbar sein. Es besteht dann auch die Möglichkeit, den zu transportierenden Rondenkern 11 in der Kernaussparung 35 mit Hilfe der beiden Zinken 37 klemmend zu halten. Eine solche Klemmwirkung ist aber optional und muss nicht vorhanden sein.

Mit Hilfe der Zuführeinrichtung 33 wird ein Rondenkern 11 zur Einsetzstelle 22 transportiert. Der Rondenkern 11 kann dabei gleitend über eine Fläche 39 eines Absatzes 40 transportiert werden (Figuren 4, 5 und 6) und über diese Fläche 39 des Absatzes 40 hinaus an die Einsetzstelle 22. Im Anschluss an die Fläche 39 kann der Rondenkern 11 gleitend an dem Rondenring 13 und/oder dem Transportteil 26 bewegt werden. In der ausgefahrenen Stellung II positioniert die Zuführeinrichtung 33 und beispielsgemäß das Zuführteil 34 den Rondenkern 11 unmittelbar am Loch 14 des an der Einsetzstelle 22 angeordneten, zugeordneten Rondenrings 13. Der Rondenkern 11 kann an der Einsetzstelle 22 am Rondenring 13 anliegen. Diese Position ist in den Figuren 4, 6 und 7 veranschaulicht.

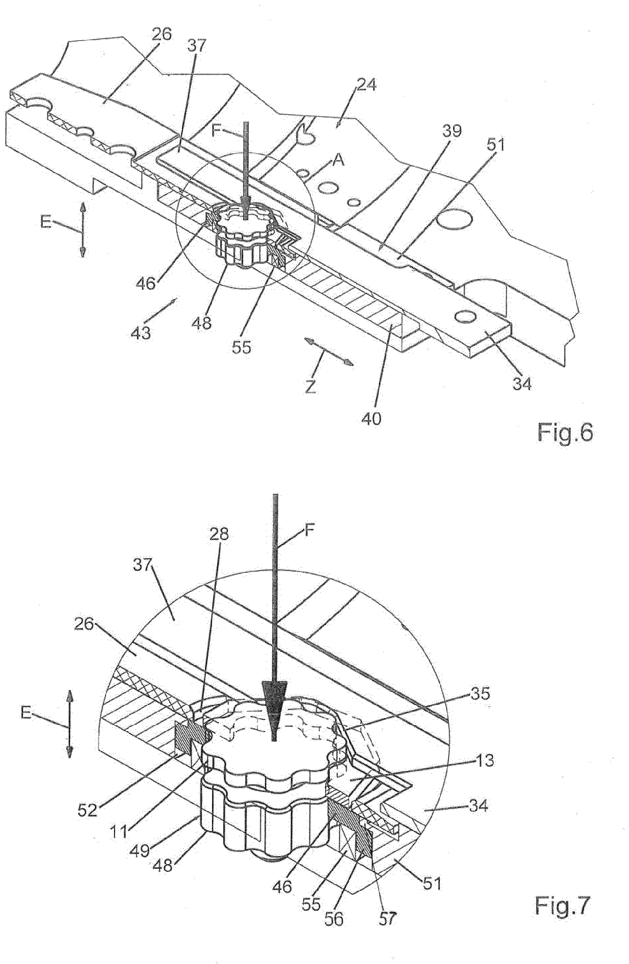

An der Einsetzstelle 22 ist eine Eindrückeinrichtung 43 vorhanden, mittels der der Rondenkern 11 in den Rondenring 13 eingesetzt bzw. eingedrückt wird. Die Eindrückeinrichtung 43 weist ein bewegbares Eindrückteil 44 auf, das in den Figuren 4 und 5 lediglich schematisch veranschaulicht ist. Das Eindrückteil 44 kann die Form eines Stempels bzw. Stößels haben und ist an der Einsetzstelle 22 mit Abstand gegenüberliegend zur Transportfläche 24 angeordnet. Das Eindrückteil 44 ist im Wesentlichen rechtwinklig zur Transportfläche 24 in Einsetzrichtung E bewegbar. Es kann auf den Rondenkern 11 eine Eindrückkraft F ausüben, um diesen aus der Kernaussparung 35 heraus in das Loch 14 des an der Einsetzstelle 22 befindlichen Rondenrings 13 einzusetzen. In den Figuren 6 und 7 ist stellvertretend für das Eindrückteil 44 lediglich die Eindrückkraft F als Pfeil veranschaulicht. Beim Ausführungsbeispiel beaufschlagt das Eindrückteil 44 den Rondenkern 11 unmittelbar auf der der Transportfläche 24 abgewandten Seite des Rondenkerns 11.

Zu der Eindrückeinrichtung 43 gehört auch ein Ausrichtmittel 45, mittels dem eine Relativverdrehung des Rondenrings 13 in seine Umfangsrichtung U bewirkt werden kann. Dadurch kann eine entsprechende Relativdrehung des Rondenrings 13 gegenüber dem an der Einsetzstelle 22 befindlichen Rondenkern 11 erfolgen. Dies ist dann notwendig, wenn die unrunde Außenkontur 12 des Rondenkerns 11 nicht mit der unrunden Innenkontur 15 des Loches 14 fluchtet bzw. übereinstimmt, so dass ein Einsetzen bzw. Eindrücken des Rondenkerns 11 in den Rondenring 13 an der Einsetzstelle 22 nicht möglich ist. Bei dem translatorischen Transport des Rondenkerns zur Einsetzstelle 22 findet eine Drehung des Rondenkerns 11 in seine Umfangsrichtung U nicht oder nur in einem unwesentlichen Ausmaß statt. Im Unterschied dazu kann durch den gleitenden Transport des Rondenrings 13 zur Einsetzstelle 22, beispielsgemäß auf einem Kreisbogen, eine Verdrehung des Rondenrings 13 in dessen Umfangsrichtung U stattfinden. Durch diese Verdrehung ist ein Einsetzen des Rondenkerns 11 an der Einsetzstelle 22 nicht mehr möglich. Deswegen ist erfindungsgemäß ein Ausrichtmittel 45 an der Einsetzstelle 22 vorhanden.

Das Ausrichtmittel 45 bewirkt eine Drehung des Rondenrings 13 in seine Umfangsrichtung U durch das Aufbringen der Eindrückkraft F durch die Eindrückeinrichtung 43. Außerdem kann dadurch auch eine seitliche Verschiebung des Rondenrings 13 in Längsrichtung L und/oder Querrichtung Q bewirkt werden.

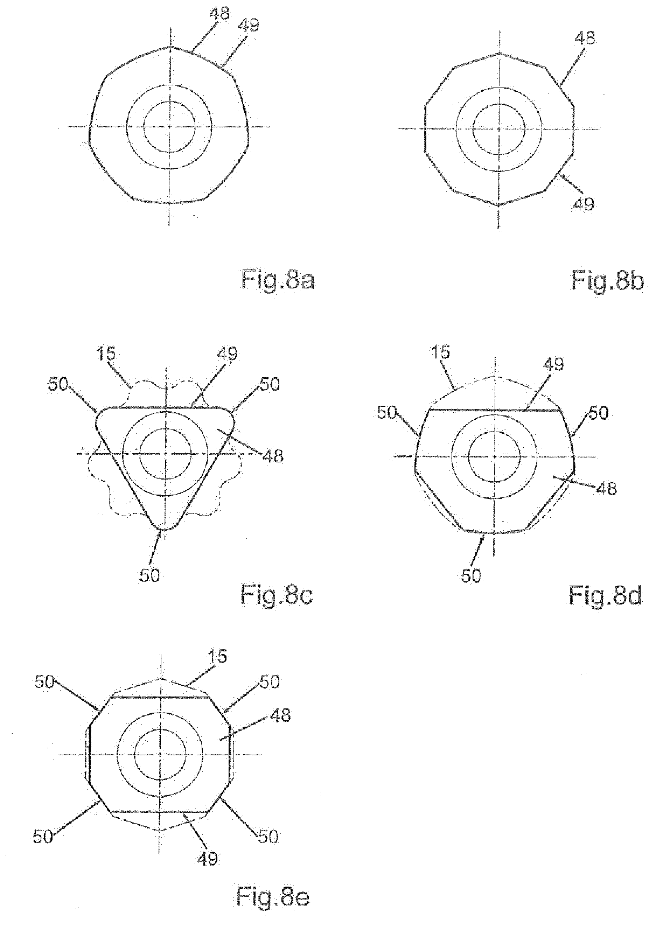

Bei dem hier beschriebenen Ausführungsbeispiel weist das Ausrichtmittel 45 einen Stützring 46 mit einer Stützfläche 47 für den Rondenring 13 auf. Befindet sich der Rondenring 13 an der Einsetzstelle 22, liegt er an der Stützfläche 47 an bzw. auf der Stützfläche 47 auf. Die Stützfläche 47 ist beispielsgemäß in derselben Ebene angeordnet, wie die Transportfläche 24, zumindest an der Einsetzstelle 22. Zu dem Ausrichtmittel 45 gehört ferner ein einteiliger oder alternativ mehrteiliger Ausrichtdorn 48, der von dem Stützring 47 umschlossen ist. Der Ausrichtdorn 48 weist eine Mantelfläche 49 auf, die eine unrunde Außenkontur hat. Die Außenkontur der Mantelfläche 49 kann mit der Innenkontur 15 des Loches 14 übereinstimmen, wie es in den Figuren 5 bis 7 dargestellt ist. Abweichend hierzu kann der Ausrichtdorn 48 auch eine von der Innenkontur 15 abweichende Kontur der Mantelfläche 49 aufweisen. Mögliche alternative Konturen des Ausrichtdorns 48 sind in den Figuren 8a bis 8e veranschaulicht. Es ist ausreichend, wenn an der Mantelfläche 49 in Umfangsrichtung drei oder mehr beabstandete Kontaktstellen 50 vorhanden sind, durch die die Drehlage des Rondenrings 13 in seiner Umfangsrichtung U vorgegeben werden kann.

Der Ausrichtdorn 48 ragt nicht durch die Ebene hindurch oder in die Ebene hinein, in der sich die Transportfläche 24 an der Einsetzstelle 22 befindet. Dadurch ist sichergestellt, dass der Ausrichtdorn 48 den Transport eines Rondenrings 13 in und aus der Einsetzstelle 22 durch die Transporteinrichtung 20 nicht behindert. Insbesondere befindet sich das freie Ende des Ausrichtdorns 48 in oder geringfügig unterhalb der Ebene der Transportfläche 24.

Der Stützring 47 ist in und entgegen der Eindrückkraft F in der Einsetzrichtung E bewegbar gelagert. In seiner unbetätigten Ausgangslage AL ist die Stützfläche 47 in einer Ebene mit der Transportfläche 24 an der Einsetzstelle 22 angeordnet. Der Stützring 46 ist hierfür in einem Lagerteil 51 gelagert, das an der Einsetzstelle 22 einen Abschnitt 24a der Transportfläche 24 an der Einsetzstelle 22 bildet. In diesem Lagerteil 51 ist eine Ausnehmung 52 vorhanden, die an dem Abschnitt 24a der Transportfläche 24 ausmündet. In diese Aussparung 52 sitzt konzentrisch der Ausrichtdorn 48 und der den Ausrichtdorn 48 umschließende Stützring 47.

Um den Stützring 47 in seiner Ausgangslage AL zu halten, ist ein Vorspannmittel 55 vorhanden, das eine Vorspannkraft auf den Stützring 47 in Einsetzrichtung E entgegen der Eindrückkraft F ausübt. Als Vorspannmittel 55 kann elastisch verformbare Elemente, Federn, beispielsweise Blattfedern, oder ähnliche bekannte eine Vorspannkraft erzeugende Elemente einzeln oder in Kombination verwendet werden. Die vom Vorspannmittel 55 erzeugte Vorspannkraft auf den Stützring 47 ist kleiner als die von der Eindrückeinrichtung 43 erzeugte Eindrückkraft F. Das Vorspannmittel 55 ist in der Aussparung 52 angeordnet.

Bei dem hier beschriebenen Ausführungsbeispiel ist die Ausgangslage AL des Stützringes 46 durch einen Anschlag 56 des Stützringes 46 definiert, der mit einem Gegenanschlag 57 am Lagerteil 51 zusammenwirkt. Der Anschlag 56 ist beispielsgemäß durch einen Ringflansch des Stützringes 46 gebildet. Als Gegenanschlag 57 dient beispielsweise eine Ringschulter, die die Aussparung 52 im Anschluss an die Ausmündung auf den Abschnitt 24a der Transportfläche 24 umgibt. In der Ausgangslage AL liegen der Anschlag 56 und der Gegenanschlag 57 aneinander an. Der Stützring 46 wird durch die Vorspannkraft des Vorspannmittels 55 mit seinem Anschlag 56 gegen den Gegenanschlag 57 gedrückt.

Das Einsetzen des Rondenkerns 11 in den Rondenring 13 an der Einsetzstelle 22 durch die Vorrichtung 10 wird wie folgt ausgeführt:

Als erstes wird ein Rondenring 13 mit Hilfe der Transporteinrichtung 20 zu der Einsetzstelle 22 bewegt. Beim Ausführungsbeispiel liegt der Rondenring 13 an der Stützfläche 47 des Stützrings 46 an. Gleichzeitig oder anschließend wird über die Zuführeinrichtung 33 ein zugeordneter Rondenkern 11 am Loch 14 des Rondenrings 13 an der Einsetzstelle 22 positioniert. Der Rondenkern 13 wird durch eine Bewegung des Zuführteils 34 in Zuführrichtung Z an die Einsetzstelle 22 bewegt.

Im Anschluss daran wird über die Eindrückeinrichtung 43 und beispielsgemäß über das Eindrückteil 44 eine Eindrückkraft F auf den Rondenkern 11 ausgeübt, so dass sich dieser zumindest teilweise aus der Kernaussparung 35 herausbewegt. Sind der Rondenkern 11 und der Rondenring 13 in ihren jeweiligen Umfangsrichtungen U korrekt zueinander ausgerichtet, wird der Rondenkern 11 in das Loch 14 des Rondenrings 13 eingesetzt.

Es kommt jedoch vor, dass sich der Rondenring 13 bei seinem Transport zur Einsetzstelle 22 in seiner Umfangsrichtung U verdreht hat. Durch das Erzeugen der Eindrückkraft F wird in diesem Fall der Rondenkern 11 gegen den Rondenring 13 gedrückt und kann nicht ohne weiteres in das Loch 14 eingesetzt werden. Durch die Eindrückkraft F wird der Stützring 46 aus seiner Ausgangslage AL gegen die Vorspannkraft des Vorspannmittels 55 in Einsetzrichtung E bewegt. Durch diese Bewegung des Stützrings 46 wird der Rondenring 13 auf den Ausrichtdorn 48 geschoben. Bei dieser Verschiebung des Rondenrings 13 über den Ausrichtdorn 48 gelangt die Innenkontur 15 des Loches 14 an den vorgesehenen Kontaktstellen 50 in Kontakt mit der Mantelfläche 49 des Ausrichtdorns 48. Durch diese Kontaktstellen ist eine vorgegebene Drehlage in Umfangsrichtung U des Rondenrings 13 vorgegeben. Durch den Kontakt mit dem Ausrichtdorn 48 wird eine Relativverdrehung und/oder seitliche Verschiebung des Rondenrings 13 relativ zum Rondenkern 11 bewirkt, bis die Außenkontur 12 des Rondenkerns 11 mit der Innenkontur 15 des Loches 14 im Rondenring 13 übereinstimmt und der Rondenkern 11 aufgrund der noch wirkenden Eindrückkraft F in das Loch 14 eingesetzt wird.

Beim bevorzugten Ausführungsbeispiel wird der Rondenkern 11 auch während des Eindrückens in den Rondenring 13 durch das Zuführteil 34 in der Kernaussparung 35 festgehalten bzw. orientiert, so dass ein versehentliches Mitdrehen des Rondenkerns 11 mit dem Rondenring 13 vermieden ist.

Sobald die Eindrückkraft F auf den Rondenring 13 abnimmt, kann der Stützring 46 durch die Vorspannmittel 55 wieder in seine Ausgangslage AL bewegt werden, so dass sich der Rondenring 13 und der nunmehr eingesetzte Rondenkern 11 schließlich wieder auf Höhe der Transportfläche 24 befinden.

Nach dem Einsetzen des Rondenkerns 11 in den Rondenring 13 wird die dadurch gebildete Ronde 11, 13 über die Transporteinrichtung 20 von der Einsetzstelle 22 wegbewegt. Beim Beschleunigen des Transportteils 26 kann das Eindrückteil 44 noch in seiner ausgefahrenen Lage mit geringem Spiel zum Rondenkern 11 bleiben und dadurch die Rondenaussparung 28 teilweise abdecken. Alternativ oder zusätzlich kann die Rondenaussparung 28 auch durch das Zuführteil 34 bzw. dessen Zinken 37 abgedeckt werden. Dadurch wird verhindert, dass die Ronde 11, 13 beim Anfahren aus der Rondenaussparung 28 an der Einsetzstelle 22 herausspringt.

Anschließend oder beispielsgemäß gleichzeitig wird eine neue Ringronde 13 zu der Einsetzstelle 22 transportiert und der beschriebene Ablauf beginnt erneut. Auch beim Verzögern des Transportteils 26 wird beispielsgemäß die Rondenaussparung 28 an der Einsetzstelle 22 durch das Zuführteil 34 bzw. dessen Zinken 37 abgedeckt, wenn sich das Zuführteil in seiner zurückgezogenen Stellung II befindet.

Außerhalb der Einsetzstelle 22 können die Rondenaussparungen 28 abgedeckt sein, um ein versehentliches Herausspringen bzw. Herausfallen der Rondenteile aus den Rondenaussparungen 28 zu vermeiden. Abhängig vom Einführen an der Aufnahmestelle 21 und der Entnahme an der Abgabestelle 23 können sind dort die Rondenaussparungen 28 an einer oder beiden Seiten offen.

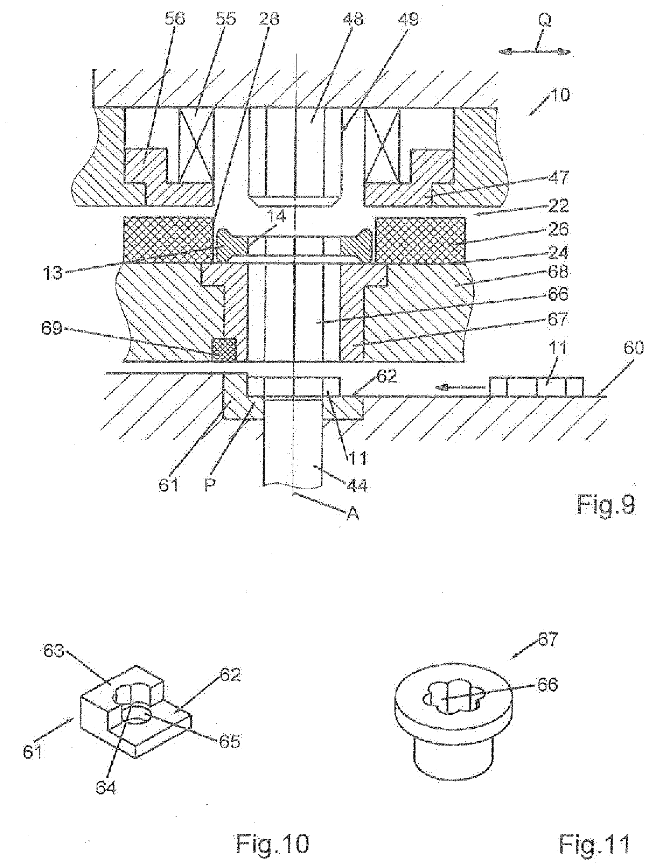

In Figur 9 ist ein abgewandeltes Ausführungsbeispiel der Vorrichtung 10 dargestellt. Die Abwandlung besteht in der Ausgestaltung der Vorrichtung 10 an der Einsetzstelle 22. Anstelle eines Zuführteils 34 weist die Zuführeinrichtung 33 ein Zuführmittel 60 auf, das dazu dient, jeweils einen Rondenkern 11 in eine Zwischenposition P zu transportieren. Die Zwischenposition P ist beispielsgemäß durch einen Zuführanschlag 61 vorgegeben. Als Zuführmittel 60 kann beispielsweise ein Zuführrutsche mit einer Neigung dienen, entlang dem die Rondenkerne 11 durch die Gewichtskraft gleiten können. Alternativ kann das Zuführmittel 60 auch beliebige andere Mittel zum Transport der Rondenkerne 11 aufweisen, beispielsweise ein Transportband oder dergleichen.

Der Zuführanschlag 61 ist in Figur 10 perspektivisch veranschaulicht. Er weist eine Auflagefläche 62 für einen in der Zwischenposition P befindlichen Rondenkern 11 auf. Benachbart zur Auflagefläche 62 ist ein Vorsprung 63 mit einer Anschlagfläche 64 angeordnet. Die Anschlagfläche 64 weist eine Kontur auf, die vorzugsweise an die Außenkontur 12 des Rondenkerns 11 angepasst ist, so dass durch die unrunde Außenkontur 12 eine Vororientierung des Rondenkerns 11 in Umfangsrichtung und/oder eine Vororientierung des Rondenkernmittelpunktes auf eine Achse A erfolgen kann.

Der Zuführanschlag 61 ist mit einer Durchbrechung 65 durchsetzt, die an der Auflagefläche 62 ausmündet. Beim Ausführungsbeispiel ist die Durchbrechung 65 zylindrisch. Die Durchbrechung 65 dient dazu, dass das Eindrückteil 44 durch die Durchbrechung 65 hindurch in Kontakt zum Rondenkern 11 gelangen kann, der sich in der Zwischenposition P befindet.

An der Einsetzstelle 22 ist das Transportteil 26 an zw. auf einer Transportpalette 68 angeordnet, die durch einen Zuführkanal 66 vollständig durchsetzt ist, der an der Einsetzstelle 22 an der Transportfläche 24 ausmündet. Der Zuführkanal 66 ist bei dem in Figur 9 dargestellten Ausführungsbeispiel in einem rohrförmigen Teil 67 vorhanden. Das rohrförmige Teil 67 kann über eine Verdrehsicherung 69 verdrehgesichert in der Transportpalette 68 angeordnet sein. Der Querschnitt des Zuführkanals 66 kann der Außenkontur 12 des Rondenkerns 11 entsprechen oder derart an die Außenkontur 12 angepasst sein, dass durch den Zuführkanal 66 eine vorgegebenen Drehlage des Rondenkerns 11 in Umfangsrichtung um seine Mittelachse sowie eine Zentrierung des Rondenmittelpunkts auf die Achse A vorgegeben wird. Hierfür genügt es drei oder mehr in Umfangsrichtung verteilt vorgesehene Anlagestellen zu definieren, analog zu der Ausgestaltung des Ausrichtdorns 48 bezüglich der Innenkontur 15 des Loches 14, wie es im Zusammenhang mit den Figuren 8a bis 8d erläutert wurde.

Der Ausrichtdorn 48, der Stützring 47, das Vorspannmittel 55 und der Anschlag 56 sind gegenüberliegend zum Zuführkanal 66 an der Einsetzstelle 22 angeordnet, so dass sich der Rondenring 13 zwischen dem Ausrichtdorn 48 und dem Zuführkanal 66 befindet. Der Ausrichtdorn 48 und der Zuführkanal 66 sind fluchtend entlang einer gemeinsamen Achse A angeordnet. Das Eindrückteil 44 und die Durchbrechung 65 sind ebenfalls fluchtend entlang dieser Achse A angeordnet.

Die Vorrichtung gemäß Figur 9 arbeitet zum Einsetzen eines Rondenkerns 11 in einen Rondenring 13 an der Einsetzstelle 22 wie folgt:

Über das Zuführmittel 60 wird ein Rondenkern 11 in die Zwischenposition P gebracht. Anschließend wir das Eindrückteil 44 entlang der Achse A bewegt und transportiert dabei den Rondenkern 11 aus der Zwischenposition P durch den Zuführkanal 66 zum Rondenring 13 hin. Ist die Ausrichtung zwischen dem Rondenring 13 und dem Rondenkern 11 korrekt, kann dieser über das Eindrückteil 44 eingedrückt bzw. eingesetzt werden. Andernfalls findet über den Ausrichtdorn 48 eine Relativverdrehung und/oder Relativverschiebung des Rondenrings 13 gegenüber dem Rondenkern 11 statt, bis diese korrekt relativ zueinander angeordnet und orientiert sind und ein Einsetzen erfolgen kann. Im Übrigen arbeitet die Vorrichtung 10 gemäß Figur 9 auf die zuvor im Zusammenhang mit dem anderen Ausführungsbeispiel beschriebene Weise. Bei dem Ausführungsbeispiel gemäß Figur 9 kann das Einsetzen des Rondenkerns 11 in den Rondenring 13 beispielsweise vertikal nach oben bzw. in einer Bewegungsrichtung mit einer vertikal nach oben gerichteten Komponente erfolgen. Alternativ ist es auch möglich die Achse A horizontal oder in einem beliebigen Winkel gegenüber der Horizontalen auszurichten.

Die Erfindung betrifft eine Vorrichtung 10 und ein Verfahren zum Einsetzen eines unrunden Rondenkerns 11 in ein unrundes Loch 14 eines Rondenrings 13. Die dadurch bereitgestellte Ronde 11, 13 wird anschließend zu einer Prägepresse weiter transportiert. Eine Transporteinrichtung 20 dient zum Transportieren des Rondenrings 13 zu einer Einsetzstelle 22. Eine Zuführeinrichtung 33 dient zum Transportieren des Rondenkerns 11 zu der Einsetzstelle 22. Dabei wird der Rondenkern 11 am Loch 14 des Rondenrings 13 positioniert. Mit Hilfe einer Eindrückeinrichtung 43, die eine Eindrückkraft F auf den Rondenkern 11 ausübt, wird der Rondenkern 11 in das Loch 14 eingesetzt. Fluchtet das unrunde Loch 14 nicht mit dem unrunden Rondenkern 11 wird an der Einsetzstelle durch das Erzeugen der Eindrückkraft F eine Relativverdrehung zwischen dem Rondenkern 11 und dem Rondenring 13 bewirkt. Vorzugsweise wird der Rondenring 13 durch die Eindrückkraft F auf einen Ausrichtdorn 48 bewegt, der eine Drehung des Rondenrings 13 in dessen Umfangsrichtung U bewirkt, bis die Kontur des Rondenkerns 11 und des Loches 14 fluchten und der Rondenkern 11 in das Loch 14 bewegt wird.

### Bezugszeichenliste:

- 10: Vorrichtung
- 11: Rondenkern
- 12: Außenkontur des Rondenkerns
- 13: Rondenring
- 14: Loch
- 15: Innenkontur des Loches

- 20: Transporteinrichtung
- 21: Aufnahmestelle
- 22: Einsetzstelle
- 23: Abgabestelle
- 24: Transportfläche
- 24a: Abschnitt der Transportfläche
- 25: Drehteller
- 26: Transportteil
- 27: freies Ende
- 28: Rondenaussparung
- 29: Führungskörper

- 33: Zuführeinrichtung
- 34: Zuführteil
- 35: Kernaussparung
- 36: Halteabschnitt
- 37: Zinken
- 38: Spalt
- 39: Fläche
- 40: Absatz

- 43: Eindrückeinrichtung
- 44: Eindrückteil
- 45: Ausrichtmittel
- 46: Stützring
- 47: Stützfläche
- 48: Ausrichtdorn
- 49: Mantelfläche
- 50: Kontaktstelle
- 51: Lagerteil
- 52: Aussparung

- 55: Vorspannmittel
- 56: Anschlag
- 57: Gegenanschlag

- 60: Zuführmittel
- 61: Zuführanschlag
- 62: Auflagefläche
- 63: Vorsprung
- 64: Anschlagfläche
- 65: Durchbrechung
- 66: Zuführkanal
- 67: rohrförmiges Teil
- 68: Transportpalette
- 69: Verdrehsicherung

- I: ausgefahrene Stellung des Zuführteils
- II: zurückgezogene Stellung des Zuführteils
- α: Drehwinkel
- A: Achse
- AL: Ausgangslage
- E: Einsetzrichtung
- F: Eindrückkraft
- L: Längsrichtung
- P: Zwischenposition
- Q: Querrichtung
- S: Spiel
- T: Transportrichtung
- U: Umfangsrichtung
- Z: Zuführrichtung

## Patentansprüche

1. Vorrichtung (10) zum Einsetzen eines Rondenkerns (11)
mit einer unrunden Außenkontur (12) in einen Rondenring (13), dessen Loch (14) eine an die unrunden Außenkontur (12) des Rondenkerns (11) angepasste Innenkontur (15) aufweist,
mit einer Transporteinrichtung (20) zum Transportieren des Rondenrings (13) zu einer Einsetzstelle (22),
mit einer Zuführeinrichtung (33), die einen Rondenkern (11) an der Einsetzstelle (22) am Loch (14) des Rondenrings (13) positioniert,
mit einer Eindrückeinrichtung (43), die ein bewegbares Eindrückteil (44) aufweist, mittels dem der durch die Zuführeinrichtung (33) an der Einsetzstelle (22) positionierte Rondenkern (11) mit einer Eindrückkraft (F) zum Rondenring (13) hin beaufschlagbar ist,
wobei die Eindrückeinrichtung (43) an der Einsetzstelle (22) ein Ausrichtmittel (45) zur Relativverdrehung des Rondenrings (13) gegenüber dem Rondenkern (11) aufweist.

2. Vorrichtung nach Anspruch 1,
**dadurch gekennzeichnet, dass** das Ausrichtmittel (45) einen Stützring (46) mit einer Stützfläche (47) für den Rondenring (13) und einen Ausrichtdorn (48) mit einer unrunden Kontur aufweist, wobei der Stützring (46) durch die Eindrückkraft (F) des Eindrückteils (44) gegenüber dem Ausrichtdorn (48) bewegbar ist.

3. Vorrichtung nach Anspruch 2,
**dadurch gekennzeichnet, dass** der Stützring (46) über ein Vorspannmittel (55) in eine unbetätigte Ausgangslage (AL) vorgespannt ist.

4. Vorrichtung nach Anspruch 2 oder 3,
**dadurch gekennzeichnet, dass** der Ausrichtdorn (48) an seiner Mantelfläche (49) zumindest drei in Umfangsrichtung (U) beabstandete Kontaktstellen (50) aufweist, die zur Anlage an der Innenkontur (15) des Loches (14) des Rondenrings (13) vorgesehen sind.

5. Vorrichtung nach einem der vorhergehenden Ansprüche,
**dadurch gekennzeichnet, dass** die Transporteinrichtung (20) eine Transportfläche (24) für den gleitenden Transport des Rondenrings (13) zur Einsetzstelle (22) aufweist.

6. Vorrichtung nach Anspruch 5,
**dadurch gekennzeichnet, dass** die Transporteinrichtung (20) ein relativ zu der Transportfläche (24) bewegbares Transportteil (26) aufweist, das eine Rondenaussparung (28) zur Aufnahme des Rondenrings (13) aufweist, die zur Transportfläche (24) und auf der der Transportfläche (24) entgegengesetzten Seite offen ist.

7. Vorrichtung nach einem der Ansprüche 2 bis 4 und nach Anspruch 5 oder 6,
**dadurch gekennzeichnet, dass** die Stützfläche (47) des Stützrings (46) in dessen Ausgangslage (AL) und die Transportfläche (24) an der Einsetzstelle (22) in einer gemeinsamen Ebene angeordnet sind.

8. Vorrichtung nach einem der vorhergehenden Ansprüche,
**dadurch gekennzeichnet, dass** die Zuführeinrichtung (33) ein bewegbares Zuführteil (34) aufweist, das eine Kernaussparung (35) zur Aufnahme des Rondenkerns (11) aufweist.

9. Vorrichtung nach Anspruch 8,
**dadurch gekennzeichnet, dass** das Zuführteil (34) translatorisch in einer Zuführrichtung (Z) bewegbar ist, die quer zu der Transportrichtung der Transporteinrichtung (20) orientiert ist.

10. Vorrichtung nach einem der vorhergehenden Ansprüche,
**dadurch gekennzeichnet, dass** die Zuführeinrichtung (33) ein Zuführmittel (60) aufweist, das einen Rondenkern (11) zu dem Eindrückteil (44) transportiert, dessen Bewegung den Rondenkern (11) zum Rondenring (13) weiter transportiert und anschließend gegen den Rondenring (13) mit der Eindrückkraft (F) beaufschlagt.

11. Verfahren zum Einsetzen eines Rondenkerns (11) mit einer unrunden Außenkontur (12) in einen Rondenring (13), dessen Loch (14) eine an die unrunden Außenkontur (15) des Rondenkerns (11) angepasste Innenkontur (15) aufweist, mit folgenden Schritten:
- Transportieren des Rondenrings (13) zu einer Einsetzstelle (22) mittels einer Transporteinrichtung (20),
- Positionieren des Rondenkern (11) an der Einsetzstelle (22) am Loch (14) des Rondenrings (13) mittels einer Zuführeinrichtung (33),
- Beaufschlagen des an der Einsetzstelle (22) positionierten Rondenkerns (11) mit einer Eindrückkraft (F) zum Rondenring (13) hin mittels einem bewegbaren Eindrückteil (44) einer Eindrückeinrichtung (43),
- Verdrehen des Rondenringes (13) relativ zum Rondenkern (11) durch ein Ausrichtmittel (45), wenn der Rondenkern (11) bei vorhandener Eindrückkraft (F) am Rondenring (13) anliegt.

12. Verfahren nach Anspruch 11,
**dadurch gekennzeichnet, dass** das Verdrehen des Rondenringes (13) dadurch erfolgt, dass ein an der Einsetzstelle (22) vorhandener Stützring (46) mit einer Stützfläche (47) für den Rondenring (13) gemeinsam mit dem Rondenring (13) durch die Eindrückkraft (F) über einen im Querschnitt unrunden Ausrichtdorn (48) verschoben wird, und der Rondenring (13) durch den Kontakt mit dem Ausrichtdorn (48) in seiner Umfangsrichtung (U) gedreht wird.

13. Verfahren nach Anspruch 11 oder 12,
**dadurch gekennzeichnet, dass** die Ronde bestehend aus dem Rondenring (13) und dem eingesetzten Rondenkern (11) zu einer Abgabestelle (23) transportiert und dort unmittelbar an eine Prägepresse oder an eine weitere Transporteinheit abgegeben wird.

## Claims

1. Apparatus (10) for inserting a circular blank core (11) with a non-round outer contour (12) into a circular blank ring (13), the hole (14) of which has an inner contour (15) adapted to the non-round outer contour (12) of the circular blank core (11),
with a transport device (20) for transporting the circular blank ring (13) to an insertion point (22),
with a feed device (33) which positions a circular blank core (11) on the hole (14) of the circular blank ring (13) at the insertion point (22),
with a pressing device (43) which comprises a movable pressing part (44), by means of which the circular blank core (11), positioned by the feed device (33) at the insertion point (22), can be pressed with a pressing force (F) towards the circular blank ring (13),
wherein the pressing device (43) has an alignment means (45) at the insertion point (22) for twisting the circular blank ring (13) relative to the circular blank core (11).

2. Apparatus according to claim 1, **characterised in that** the alignment means (45) has a support ring (46) with a support face (47) for the circular blank ring (13), and an alignment mandrel (48) with a non-round contour, wherein the support ring (46) can be moved relative to the alignment mandrel (48) by the pressing force (F) of the pressing part (44).

3. Apparatus according to claim 2, **characterised in that** the support ring (46) is pretensioned via a pretension means (55) in an inactivated starting position (AL).

4. Apparatus according to claim 2 or 3, **characterised in that** on its casing surface (49), the alignment mandrel (48) has at least three contact points (50) spaced in the circumferential direction and provided for resting on the inner contour (15) of the hole (14) of the circular blank ring (13).

5. Apparatus according to any of the preceding claims, **characterised in that** the transport device (20) has a transport face (24) for the sliding transport of the circular blank ring (13) to the insertion point (22).

6. Apparatus according to claim 5, **characterised in that** the transport device (20) has a transport part (26) which is movable relative to the transport face (24) and has a circular blank recess (28) for receiving the circular blank ring (13), which recess is open towards the transport face (24) and on the side opposite the transport face (24).

7. Apparatus according to any of claims 2 to 4 and according to claim 5 or 6, **characterised in that** the support face (47) of the support ring (46) in its starting position (AL), and the transport face (24) at the insertion point (22), are arranged in a common plane.

8. Apparatus according to any of the preceding claims, **characterised in that** the feed device (33) has a movable feed part (34) which comprises a core recess (35) for receiving the circular blank core (11).

9. Apparatus according to claim 8, **characterised in that** the feed part (34) is movable in translation in a feed direction (Z) which is oriented transversely to the transport direction of the transport device (20).

10. Apparatus according to any of the preceding claims, **characterised in that** the feed device (33) has a feed means (60) which transports a circular round core (11) to the pressing part (44), the movement of which transports the circular blank core (11) onward to the circular blank ring (13) and then presses this against the circular blank ring (13) with the pressing force (F).

11. Method for inserting a circular round core (11) with a non-round outer contour (12) in a circular blank ring (13), the hole (14) of which has an inner contour (15) adapted to the non-round outer contour (12) of the circular blank core (11), with the following steps:
- transporting the circular blank ring (13) to an insertion point (22) by means of a transport device (20),
- positioning the circular blank core (11) on the hole (14) of the circular blank ring (13) at the insertion point (22), by means of a feed device (33),
- pressing the circular blank core (11) positioned at the insertion point (22) towards the circular blank ring (13) with a pressing force (F), by means of a movable pressing part (44) of a pressing device (43),
- twisting the circular blank ring (13) relative to the circular blank core (11) by an alignment means (45) when the circular blank core (11) lies on the circular blank ring (13) in the presence of the pressing force (F).

12. Method according to claim 11, **characterised in that** the circular blank ring (13) is twisted **in that** a support ring (46) present at the insertion point (22), with a support face (47) for the circular blank ring (13), is moved together with the circular blank ring (13) by the pressing force (F) over an alignment mandrel (48) of non-round cross-section, and the circular blank ring (13) is turned in its circumferential direction (U) by the contact with the alignment mandrel (48).

13. Method according to claim 11 or 12, **characterised in that** the circular blank consisting of the circular blank ring (13) and the inserted circular blank core (11) is transported to an output point (23) where it is output directly to an embossing press or a further transport unit.

## Revendications

1. Dispositif (10) destiné à la mise en place d'un noyau (11) de flan rond, doté d'un contour extérieur non circulaire (12), dans un anneau (13) de flan rond dont le trou (14) présente un contour extérieur (15) adapté au contour extérieur non circulaire (12) du noyau (11) de flan rond,
comportant un dispositif de transport (20) destiné au transport de l'anneau (13) de flan rond jusqu'à un emplacement de mise en place (22),
comportant un dispositif d'amenage (33) qui positionne un noyau (11) de flan rond à l'emplacement de mise en place (22) sur le trou (14) de l'anneau (13) de flan rond,
comportant un dispositif d'enfoncement (43) qui présente une pièce d'enfoncement (44) au moyen de laquelle le noyau (11) de flan rond positionné par le dispositif d'amenage (33) à l'emplacement de la mise en place (22) peut être frappé au moyen d'une force d'enfoncement (F) en direction de l'anneau (13) de flan rond,
le dispositif d'enfoncement (43) présente, à l'emplacement destiné à la mise en place (22), un moyen d'alignement (45) en vue de la rotation relative de l'anneau (13) de flan rond par rapport au noyau (11) de flan rond.

2. Dispositif selon la revendication 1,
**caractérisé en ce que** le moyen d'alignement (45) présente une bague d'appui (46) comportant une surface d'appui (47) destinée à l'anneau (13) de flan rond et un ergot d'alignement (48) doté d'un contour non circulaire, la bague d'appui (46) pouvant être déplacée par la force d'enfoncement (F) de la pièce d'enfoncement (44) par rapport à l'ergot d'alignement (48).

3. Dispositif selon la revendication 2,
**caractérisé en ce que** là bague d'appui (46) est mise sous contrainte préalable par l'intermédiaire d'un moyen (55) de contrainte préalable dans une position de départ (AL) non actionnée.

4. Dispositif selon la revendication 2 ou 3,
**caractérisé en ce que** l'ergot d'alignement (48) présente sur sa surface d'enveloppe (49) au moins trois emplacements de contact (50) situés à l'écart les uns des autres dans la direction circonférentielle (U), lesquels emplacements de contact sont prévus pour s'appuyer sur le contour intérieur (15) du trou (14) de l'anneau (13) de flan rond.

5. Dispositif selon l'une des revendications qui précèdent, **caractérisé en ce que** le dispositif de transport (20) présente une surface de transport (24) destinée au transport par glissement de l'anneau (13) de flan rond jusqu'à l'emplacement de mise en place (22).

6. Dispositif selon la revendication 5,
**caractérisé en ce que** le dispositif de transport (20) présente une pièce de transport (26) qui peut être déplacée par rapport à la surface de transport (24), qui comporte un évidement (28) pour flan rond destiné à recevoir l'anneau (13) de flan rond, lequel est ouvert vers la surface de transport (24) et sur le côté situé à l'opposé de la surface de transport (24).

7. Dispositif selon l'une des revendications 2 à 4 et selon la revendication 5 ou 6,
**caractérisé en ce que** la surface d'appui (47) de la bague d'appui (46) en position de départ (AL) et la surface de transport (24) sont disposées à l'emplacement de mise en place (22) dans un plan commun.

8. Dispositif selon l'une des revendications qui précèdent, **caractérisé en ce que** le dispositif d'amenage (33) présente une pièce d'amenage mobile (34) qui présente un évidement (35) pour noyau destiné à recevoir le noyau (11) de flan rond.

9. Dispositif selon la revendication 8,
**caractérisé en ce que** la pièce d'amenage (34) peut être déplacée en translation dans une direction d'amenage (Z) qui est orientée transversalement à la direction de transport du dispositif de transport (20).

10. Dispositif selon l'une des revendications qui précèdent, **caractérisé en ce que** le dispositif d'amenage (33) présente un moyen d'amenage (60) qui transporte un noyau (11) de flan rond jusqu'à la pièce d'enfoncement (44), dont le déplacement transporte plus loin le noyau (11) de flan rond plus loin jusqu'à l'anneau (13) de flan rond et ensuite frappe contre l'anneau (13) de flan rond au moyen de la force d'enfoncement (F).

11. Procédé de mise en place d'un noyau (11) de flan rond doté d'un contour extérieur non circulaire (12) dans un anneau (13) de flan rond dont le trou (14) présente un contour intérieur (15) adapté au contour extérieur non circulaire (15) du noyau (11) de flan rond, comportant les opérations suivantes :
- transport de l'anneau (13) de flan rond jusqu'à un emplacement de mise en place (22) au moyen d'un dispositif de transport (20),
- positionnement du noyau (11) de flan rond à l'emplacement de mise en place (22) sur le trou (14) de l'anneau (13) de flan rond au moyen d'un dispositif d'amenage (33),
- frappe du noyau (11) de flan rond positionné à l'emplacement de mise en place (22) à l'aide d'une force d'enfoncement (F) en direction de l'anneau (13) de flan rond au moyen d'une pièce d'enfoncement mobile (44) d'un dispositif d'enfoncement (43),
- rotation de l'anneau (13) de flan rond par rapport au noyau (11) de flan rond à l'aide d'un moyen d'alignement (45) alors que le noyau (11) de flan rond est en appui sur l'anneau (13) de flan rond, du fait de la présence de la force d'enfoncement (F).

12. Procédé selon la revendication 11,
**caractérisé en ce que** la rotation de l'anneau (13) de flan rond est effectuée en raison du fait qu'une bague d'appui (46) présente à l'emplacement de mise en place (22), dotée d'une surface d'appui (47) pour l'anneau (13) de flan rond est poussée en commun avec l'anneau (13) de flan rond, par la force d'enfoncement (F) par l'intermédiaire d'un ergot d'alignement (48) dont la section est non circulaire et que l'anneau (13) de flan rond est tourné du fait du contact avec l'ergot d'alignement (48) dans sa direction périphérique (U).

13. Procédé selon la revendication 11 ou 12,
**caractérisé en ce que** le flan rond constitué de l'anneau (13) de flan rond et du noyau (11) de flan rond mis en place est transporté jusqu'à un emplacement de délivrance (23) et y est délivré directement à une presse d'estampage, ou à un autre ensemble de transport.
